# EUROPEAN PATENT SPECIFICATION

(11) **EP 2 763 356 B1**
(45) Date of publication and mention of the grant of the patent: **11.01.2017**
(21) Application number: 11867291.4
(22) Date of filing: 27.10.2011
(51) Int. Cl.: H04J 14/02, H04L 12/721

(54) **METHOD, DEVICE, AND NETWORK FOR ESTABLISHING WAVELENGTH CONNECTION HAVING ADJUSTABLE SPECTRAL BANDWIDTH**
VERFAHREN, VORRICHTUNG UND NETZWERK ZUR HERSTELLUNG EINER WELLENLÄNGENVERBINDUNG MIT EINSTELLBARER SPEKTRALER BANDBREITE
PROCÉDÉ, DISPOSITIF, ET RÉSEAU POUR L'ÉTABLISSEMENT DE CONNEXION DE LONGUEUR D'ONDE AYANT UNE BANDE PASSANTE SPECTRALE RÉGLABLE

(43) Date of publication of application: 06.08.2014
(73) Proprietor: Huawei Technologies Co., Ltd., Longgang District Shenzhen, Guangdong 518129 (CN)
(72) Inventor: ZI, Xiaobing, Shenzhen Guangdong 518129 (CN)
(74) Representative: Goddar, Heinz J.
(86) International application number: PCT/CN2011/081419
(87) International publication number: WO 2012/167532

(56) References cited:
- WO-A2-00/46957
- CN-A- 101 345 906
- CN-A- 101 409 588
- CN-A- 102 143 409
- US-A1- 2005 030 951
- US-A1- 2011 091 202
- US-B1- 7 295 518

## Description

### TECHNICAL FIELD

The present invention relates to optical communications technologies, and in particular, to a method, a node device on a network side, a node device on a client side, and a network for establishing a wavelength connection with adjustable spectral bandwidth.

### BACKGROUND

A wavelength division network includes nodes and links, and these nodes are connected through optical links. An optical link can bear multiple wavelength paths. The same wavelength paths in different optical links may be connected by a node to form a wavelength connection. In other words, a source node is connected to a sink node through one or more optical links, and the connection between the source node and the sink node is called a wavelength connection.

A wavelength connection is generally used to transmit digital signals. The wavelength connection may be unidirectional and may also be bidirectional. As each optical link is capable of transmitting multiple wavelengths, its transmission capacity is relatively large.

At the source node end, the digital signals are converted from electrical signals into optical signals through electrical-to-optical conversion by using a specific modulation format and are transmitted through a specific wavelength connection. At the sink node end, the optical signals are converted into the electrical signals through optical-to-electrical conversion by using a corresponding demodulation format, thereby restoring the digital signals.

The wavelength connection needs to occupy spectral resources in an optical link. Available spectral resources in each optical link are limited. Typically, available spectral resources in an optical link are divided into frequency bands (grid) (that is frequency ranges and also called "spectral bandwidth") with a constant spacing, and each frequency grid is a wavelength path. A disadvantage of this manner for dividing wavelength paths by using a constant spectral spacing is as follows: When a mixture of small-granularity and large-granularity (such as 10 Gbps and 1 Tbps) services are transmitted through a wavelength connection, this requires that spectral resources in an optical link be divided into wavelength paths according to a relatively large spectral spacing, for example, wavelength paths are divided according to a 100 GHz spectral spacing, so as to meet requirements of the large-granularity services; however, small-granularity services do not need such a large spectral spacing. In addition, a larger spectral spacing indicates fewer available wavelength paths, and this reduces utilization of spectral resources in the optical link.

For the purpose of improving utilization of spectral resources on the wavelength division network, spectral resources in an optical fiber may be divided into wavelength paths according to an inconstant spacing, and the spectral bandwidth of a wavelength connection is adjusted according to service requirements. The spectral bandwidth required by each wavelength connection is relevant to the modulation formats at both ends. The modulation formats required by both ends of a wavelength connection are relevant to the length of a path, the number of hops, and the service granularity.

For example, spectral resources in an optical link are divided into multiple small frequency bands (slot), and multiple slots form a large frequency channel to transmit signals of a wavelength path. Each slot has a spectral bandwidth of 12.5 GHz, and a wavelength connection may continuously occupy one or more of the slots. In addition, on the network, relationships between the modulation formats of signals at both ends of the wavelength connection, required spectral bandwidth, and path information (such as path length information and information about the number of hops) are determined.

However, topology information about a network on a client side is separated from that on a server side; that is, both ends of a wavelength connection cannot acquire topology information about an intermediate network on a server side. Therefore, before the wavelength connection is established, a path of the wavelength connection cannot be calculated, and the length of the path and the number of hops cannot be determined. This leads to incapability of selecting an appropriate modulation format, determining the required spectral bandwidth, and saving spectral bandwidth resources of the network on the server side.

In the prior art, spectral resources are allocated according to the largest possible path length to ensure that a wavelength connection is available in any condition, thereby failing in effectively saving spectral resources on the network. For example, a modulation format of 57 GHz binary phase shift keying (Quadrature/Quaternary Phase Shift Keying, QPSK) may need to be used for a wavelength connection that passes an R1-A-C-B-R2 path, and, as a result, each segment of a link needs to occupy a spectral resource of 57 GHz; whereas the path in fact requires only a modulation format of 33 GHz 16-QAM (Quadrature Amplitude Modulation, quadrature amplitude modulation) before becoming available.

US 2005/030951 A1 discloses an architecture and method for performing coarse-grain reservation of lightpaths within wavelength-division-multiplexed (WDM) based photonic burst-switched (PBS) networks with variable time slot provisioning. The method employs extensions to the RSVP-TE signaling protocol, which uses various messages to reserve resources. A resource reservation request is passed between nodes during a downstream traversal of the lightpath route connecting a source node to a destination node via one or more switching nodes, wherein each node is queried to determine whether it has transmission resources (i.e., a lightpath segment) available during a future scheduled time period. Soft reservations are made for each lightpath segment that is available using information contained in a corresponding label. If all lightpath segments for a selected route are available, a reservation response message is sent back upstream along the route from the destination node to the source node. In response to receiving the response, the soft reservations are turned into hard reservations at each node.

US 2011/091202 A1 discloses an apparatus which comprising a network element (NE) configured to support routing-associated signal compatibility constraint information that is associated with the NE using Generalized Multi-Protocol Label Switching (GMPLS) and an open shortest path first (OSPF) routing protocol, wherein the signal compatibility constraint information comprises a modulation type list, a Forward Error Correction (FEC) type list, a bit rate range list, and an acceptable client signal list, and wherein the signal compatibility constraint information is associated with a resource block (RB) pool for a plurality of NEs. Also disclosed is a network component comprising a transmitter unit configured to transmit signal compatibility constraints via GMPLS OSPF routing, wherein the signal compatibility constraints comprise a modulation type list, a FEC type list, a bit rate range list, and an acceptable client signal list.

WO 00/46957 A2 discloses a boundary router which is presented for exchanging packets between a first data communication network and a second data communication network via a long-haul optical fiber communication network. Each optical fiber employed in the optical fiber communication network has, for a given transmission distance and modulation rate, a maximum available bandwidth or transmission capacity. The router includes a first interface for transmitting and receiving, at a first line rate, packets to and from the first data communication network, and a second interface for transmitting and receiving, at a second line rate different from the first line rate, packets to and from the long haul optical fiber communication network.; Advantageously, the second line rate is selected such that a greater amount of the maximum available bandwith of each optical fiber in the long haul optical fiber communication network is utilized than at the first line rate. The most efficent line rate for the optical links of a given long haul network may be lower or higher than the first line rate. Hence, to arrive at the second line rate, the router may be configured to either aggregate the packets received via the first interface with packets received via one or more additional interfaces or, alternatively, to separate a single stream of packets received via the first interface into plural streams, while maintaining the integrity of individual flows. These aggregating and separating operations are transparent to the network layer.

### SUMMARY

Embodiments of the present invention provide a method, a node device on a network side, a node device on a client side, and a network for establishing a wavelength connection with adjustable spectral bandwidth so as to effectively save spectral resources on a network.

An embodiment of the present invention provides a method for establishing a wavelength connection, including:
receiving, by a first node on a network side, a first signaling message sent by a first node on a client side, where the first signaling message includes a specified modulation format and required spectral bandwidth of a wavelength connection to be established, wherein the first node on the network side is a node on the network side adjacent to the first node on the client side;
obtaining, by the first node on the network side through calculation according to the specified modulation format and required spectral bandwidth of the wavelength connection to be established, a network-side path of the wavelength connection to be established, and allocating a spectral resource according to the specified modulation format and required spectral bandwidth of the wavelength connection to be established;
forwarding, by the first node on the network side, the first signaling message to a second node on the network side along the path, wherein the second node on the network side is a node on the network side adjacent to a second node on the client side, wherein the first signaling message carries the allocated spectral resource;
forwarding, by the second node on the network side, the first signaling message to the second node on the client side, wherein the first signaling message carries the allocated spectral resource, so that the second node on the client side sets a modulation format and a spectral resource of the second node on the client side according to the specified modulation format of the wavelength connection to be established and the allocated spectral resource;
receiving, by the first node on the network side, a second signaling message returned by the second node on the client side, where the second signaling message includes the modulation format and the spectral resource that are set by the second node on the client side; and
returning, by the first node on the network side, the second signaling message to the first node on the client side so that the first node on the client side sets its local modulation format and spectral resource according to the modulation format and the spectral resource that are set by the second node on the client side, thereby completing establishment of the wavelength connection.

An embodiment of the present invention further provides a first node device on a network side for establishing a wavelength connection with adjustable spectral bandwidth, including:
a first signaling receiving unit, configured to receive a first signaling message sent by a first node on a client side, where the first signaling message includes a specified modulation format and required spectral bandwidth of a wavelength connection to be established, wherein the first node on the network side is a node on the network side adjacent to the first node on the client side;
a path acquiring unit, configured to obtain through calculation according to the specified modulation format and required spectral bandwidth of the wavelength connection to be established, a network-side path of the wavelength connection to be established, and allocate a spectral resource according to the specified modulation format and required spectral bandwidth of the wavelength connection to be established;
a first signaling forwarding unit, configured to forward the first signaling message to a second node on the network side along the path, wherein the second node on the network side is a node on the network side adjacent to a second node on the client side, wherein the first signaling message carries the allocated spectral resource, so that the second node on the client side sets a modulation format and a spectral resource of the second node on the client side according to the specified modulation format of the wavelength connection to be established and the allocated spectral resource;
a second signaling receiving unit, configured to receive a second signaling message returned by the second node on the client side, where the second signaling message includes the modulation format and the spectral resource that are set by the second node on the client side; and
a second signaling forwarding unit, configured to return the second signaling message to the first node on the client side, so that the first node on the client side sets a modulation format and a spectral resource of the first node on the client side according to the modulation format and the spectral resource that are set by the second node on the client side, thereby completing establishment of the wavelength connection.

In the method, the node device on the network side, the node device on the client side, and the network for establishing a wavelength connection with adjustable spectral bandwidth according to the embodiments of the present invention, the spectral resource is allocated, according to the specified modulation format and required spectral resource, to the wavelength connection to be established, or the modulation format of the wavelength connection to be established and the allocated spectral resource are determined in a process for establishing the wavelength connection, so that, in the case where information on the client side is separated from that on a server side during establishment of the wavelength connection, signaling on a control plane is used to determine a modulation format and a required spectral resource at both ends according to the length of a path, and this enables the network side to allocate the minimum spectral resources to each wavelength connection, thereby implementing effective allocation of spectral resources on the network and effectively saving spectral resources on the network.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG 1 is a flowchart of a method for establishing a wavelength connection with adjustable spectral bandwidth according to an embodiment of the present invention;
FIG. 2 is a flowchart of another method for establishing a wavelength connection with adjustable spectral bandwidth according to an embodiment of the present invention;
FIG. 3 is a flowchart of another method for establishing a wavelength connection with adjustable spectral bandwidth according to an embodiment of the present invention;
FIG. 4 is a schematic diagram of application environment of a method for establishing a wavelength connection with adjustable spectral bandwidth according to an embodiment of the present invention;
FIG. 5 is a schematic structural diagram of an extension part of a signaling message in a method for establishing a wavelength connection with adjustable spectral bandwidth according to an embodiment of the present invention;
FIG. 6 is a flowchart of still another method for establishing a wavelength connection with adjustable spectral bandwidth according to an embodiment of the present invention;
FIG. 7 is another schematic structural diagram of an extension part of a signaling message in a method for establishing a wavelength connection with adjustable spectral bandwidth according to an embodiment of the present invention;
FIG. 8 is still another schematic structural diagram of an extension part of a signaling message in a method for establishing a wavelength connection with adjustable spectral bandwidth according to an embodiment of the present invention;
FIG. 9 is a schematic structural diagram of a node device on a network side for establishing a wavelength connection with adjustable spectral bandwidth according to an embodiment of the present invention;
FIG. 10 is a schematic structural diagram of a node device on a client side for establishing a wavelength connection with adjustable spectral bandwidth according to an embodiment of the present invention;
FIG. 11 is a schematic structural diagram of another node device on a client side for establishing a wavelength connection with adjustable spectral bandwidth according to an embodiment of the present invention;
FIG. 12 is a schematic structural diagram of another node device on a network side for establishing a wavelength connection with adjustable spectral bandwidth according to an embodiment of the present invention;
FIG. 13 is a schematic structural diagram of still another node device on a network side for establishing a wavelength connection with adjustable spectral bandwidth according to an embodiment of the present invention; and
FIG. 14 is a schematic structural diagram of a network for establishing a wavelength connection with adjustable spectral bandwidth according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Relationships between modulation formats of signals at both ends of a wavelength connection, the required spectral bandwidth, and path information (such as path length information and information about the number of hops) need to be determined in advance so as to effectively allocate spectral resources in an optical fiber. These relationships may be acquired through tests, or empirical values are taken.

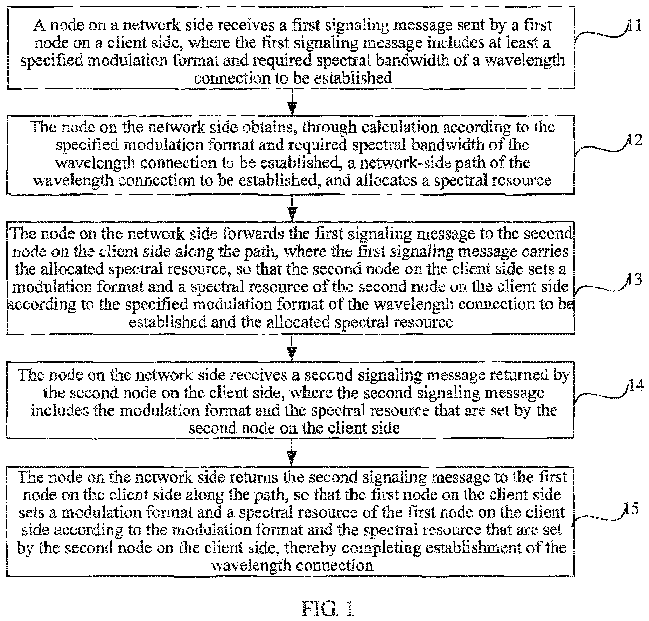

FIG. 1 is a flowchart of a method for establishing a wavelength connection with adjustable spectral bandwidth according to an embodiment of the present invention. As shown in FIG. 1, the method for establishing a wavelength connection with adjustable spectral bandwidth includes:
Step 11: A node on a network side receives a first signaling message sent by a first node on a client side, where the first signaling message includes at least a specified modulation format and required spectral bandwidth of a wavelength connection to be established.

The specified modulation format and required spectral bandwidth of the wavelength connection to be established are determined by the first node on the client side and a second node on the client side through negotiation in a call phase, or specified by a third party.

The first signaling message may be a Resource Reservation Protocol (Resource Reservation Protocol, RSVP) message that includes an extension field. The content carried in the extension field includes at least the specified modulation format and required spectral bandwidth of the wavelength connection to be established. The extension field may include the length of the carried content, a content type identifier and the content.

The first signaling message may further include path restriction information. The path restriction information is obtained by the first node on the client side through calculation according to the specified modulation format and required spectral bandwidth of the wavelength connection to be established.

Step 12: The node on the network side obtains, through calculation according to the specified modulation format and required spectral bandwidth of the wavelength connection to be established, a network-side path of the wavelength connection to be established, and allocates a spectral resource.

Specifically, the node on the network side obtains the path restriction information according to the specified modulation format and required spectral bandwidth of the wavelength connection to be established, where the modulation format and the required spectral bandwidth are in the first signaling message.

The node on the network side obtains, by using the path restriction information and the specified required spectral bandwidth, the network-side path of the wavelength connection to be established that meets the path restriction information.

When the first signaling message includes the path restriction information, the node on the network side may obtain, directly by using the path restriction information and the specified required spectral bandwidth, the network-side path of the wavelength connection to be established that meets the path restriction information.

Step 13: The node on the network side forwards the first signaling message to the second node on the client side along the path, where the first signaling message carries the allocated spectral resource, so that the second node on the client side sets a modulation format and a spectral resource of the second node on the client side according to the specified modulation format of the wavelength connection to be established and the allocated spectral resource.

Step 14: The node on the network side receives a second signaling message returned by the second node on the client side, where the second signaling message includes the modulation format and the spectral resource that are set by the second node on the client side.

The second signaling message may also be an RSVP message that includes an extension field. In the second signaling message, the content carried in the extension field includes at least the modulation format and the spectral resource that are set by the second node on the client side.

Step 15: The node on the network side returns the second signaling message to the first node on the client side along the path, so that the first node on the client side sets a modulation format and a spectral resource of the first node on the client side according to the modulation format and the spectral resource that are set by the second node on the client side, thereby completing establishment of the wavelength connection.

In this embodiment, a node on a network side allocates a spectral resource to a wavelength connection according to a modulation format and required spectral bandwidth of a wavelength connection to be established, where the modulation format and the required spectral bandwidth are specified in a first signaling message sent by one end of the wavelength connection to be established, that is, a first node on a client side, and provides the allocated spectral resource for the other end of the wavelength connection to be established, that is, a second node on the client side, so that the second node on the client side sets its local modulation format and spectral resource according to the modulation format specified by the first node on the client side and the spectral resource allocated by the node on the network side, and notifies the first node on the client side through the network side; and then, the first node on the client side makes modulation format and spectral resource settings matching those of the second node on the client side. This solves the problem of ineffective allocation of spectral resources caused by information separation between the network side and the client side, enables the node on the network side to allocate the minimum spectral resources to each wavelength connection, and implements effective allocation of spectral resources.

The following describes in further detail the method for establishing a wavelength connection with adjustable spectral bandwidth with reference to specific embodiments.

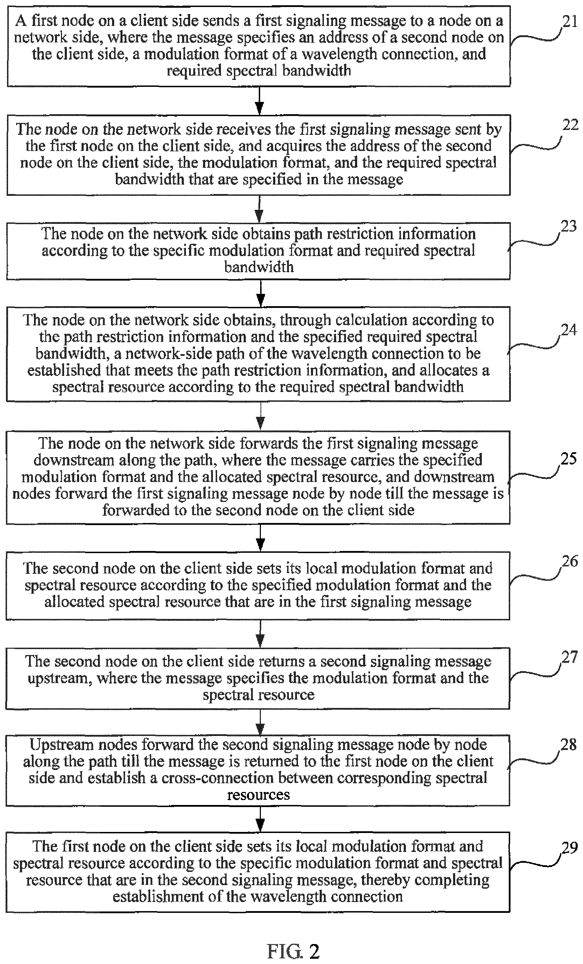

FIG. 2 is a flowchart of another method for establishing a wavelength connection with adjustable spectral bandwidth according to an embodiment of the present invention. In this embodiment, path restriction information is obtained by a node on a network side through calculation. As shown in FIG. 2, the method for establishing a wavelength connection with adjustable spectral bandwidth includes:
Step 21: A first node on a client side sends a first signaling message to the node on the network side, where the message specifies an address of a second node on the client side, a modulation format of the wavelength connection, and required spectral bandwidth.
Step 22: The node on the network side receives the first signaling message sent by the first node on the client side, and acquires the address of the second node on the client side, the modulation format, and the required spectral bandwidth that are specified in the message.
Step 23: The node on the network side obtains the path restriction information according to the specific modulation format and required spectral bandwidth.
Step 24: The node on the network side obtains, through calculation according to the path restriction information and the specified required spectral bandwidth, a network-side path of the wavelength connection to be established that meets the path restriction information, and allocates a spectral resource according to the required spectral bandwidth.
Step 25: The node on the network side forwards the first signaling message downstream along the path, where the message carries the specified modulation format and the allocated spectral resource, and downstream nodes forward the first signaling message node by node till the message is forwarded to the second node on the client side.
Step 26: The second node on the client side sets its local modulation format and spectral resource according to the specified modulation format and the allocated spectral resource that are in the first signaling message.
Step 27: The second node on the client side returns a second signaling message upstream, where the message specifies the modulation format and the spectral resource.
Step 28: Upstream nodes forward the second signaling message node by node along the path till the message is returned to the first node on the client side and establish a cross-connection between corresponding spectral resources.
Step 29: The first node on the client side sets its local modulation format and spectral resource according to the modulation format and the spectral resource that are specified in the second signaling message, thereby completing establishment of the wavelength connection.

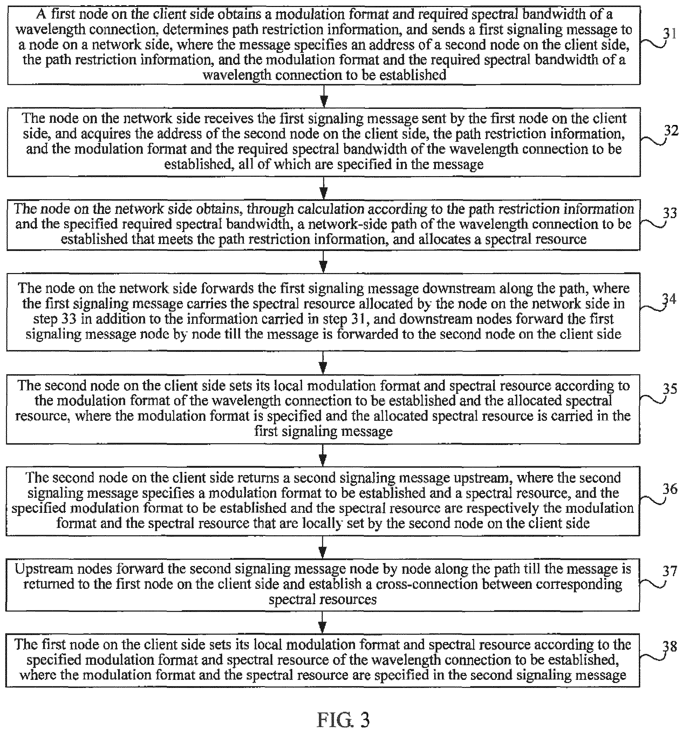

FIG. 3 is a flowchart of another method for establishing a wavelength connection with adjustable spectral bandwidth according to an embodiment of the present invention. In this embodiment, path restriction information is generated by a first node on a client side. As shown in FIG. 3, the method for establishing a wavelength connection with adjustable spectral bandwidth includes:
Step 31: The first node on the client side obtains a modulation format and required spectral bandwidth of the wavelength connection, determines the path restriction information, and sends a first signaling message to a node on a network side, where the message specifies an address of a second node on the client side, the path restriction information, and the modulation format and the required spectral bandwidth of a wavelength connection to be established.
Step 32: The node on the network side receives the first signaling message sent by the first node on the client side, and acquires the address of the second node on the client side, the path restriction information, and the modulation format and the required spectral bandwidth of the wavelength connection to be established, all of which are specified in the message.
Step 33: The node on the network side obtains, through calculation according to the path restriction information and the specified required spectral bandwidth, a network-side path of the wavelength connection to be established that meets the path restriction information, and allocates a spectral resource.
Step 34: The node on the network side forwards the first signaling message downstream along the path, where the first signaling message carries the spectral resource allocated by the node on the network side in step 33 in addition to the information carried in step 31, and downstream nodes forward the first signaling message node by node till the message is forwarded to the second node on the client side.
Step 35: The second node on the client side sets its local modulation format and spectral resource according to the modulation format of the wavelength connection to be established and the allocated spectral resource, where the modulation format is specified and the allocated spectral resource is carried in the first signaling message.
Step 36: The second node on the client side returns a second signaling message upstream, where the second signaling message specifies a modulation format to be established and a spectral resource, and the specified modulation format to be established and the spectral resource are respectively the modulation format and the spectral resource that are locally set by the second node on the client side.
Step 37: Upstream nodes forward the second signaling message node by node along the path till the message is returned to the first node on the client side and establish a cross-connection between corresponding spectral resources.
Step 38: The first node on the client side sets its local modulation format and spectral resource according to the specified modulation format and spectral resource of the wavelength connection to be established, where the modulation format and the spectral resource are specified in the second signaling message.

In the embodiment, the specified modulation format and required spectral bandwidth of the wavelength connection to be established are determined by the first node on the client side and the second node on the client side through negotiation in a call phase, or specified by a third party.

The specified modulation format and required spectral bandwidth of the wavelength connection to be established are transmitted by being carried in an extended RSVP message.

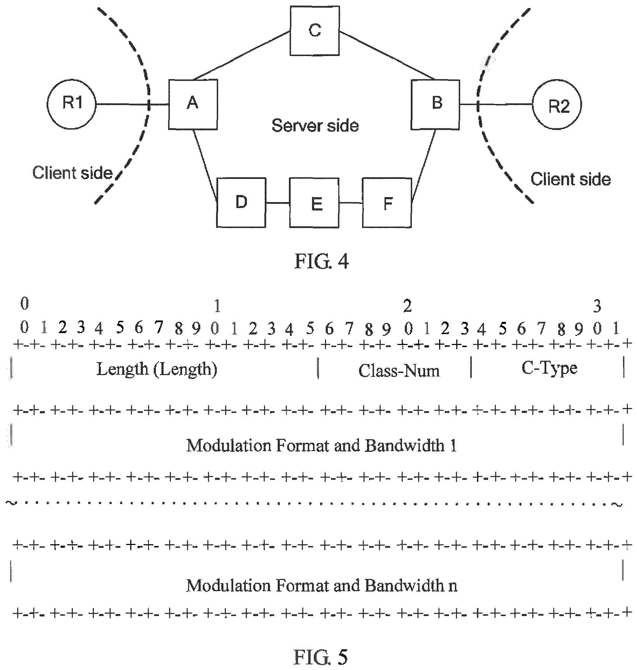

The following takes the network shown in FIG. 4 as application environment to describe in further detail the method for establishing a wavelength connection.

In FIG. 4, spectral resources in an optical link are divided into multiple slots, and each wavelength connection may continuously occupy one or more of the slots given that each slot has a spectral bandwidth of 12.5 GHz. Specifically, given that a start frequency is 193.1 THz, slot 1 indicates a frequency of 193.1 THz and a frequency band with a width of 12.5 GHz, slot 2 indicates a frequency of 193.1125 THz and a frequency band with a width of 12.5 GHz, and available spectral bandwidth resources in each optical link of the network on a server side are shown in Table 1.

**Table 1 Available spectral resources**

| A-C | C-B | B-F | F-E | E-D | D-A |
|---|---|---|---|---|---|
| Slots 1∼5 | Slots 1∼10 | Slots 1∼6 | Slots 1∼10 | Slots 1∼10 | Slots 1∼10 |

On the network, relationships between modulation formats of signals at both ends of the wavelength connection, required spectral bandwidth, and path information (such as path length information and information about the number of hops) are shown in Table 2.

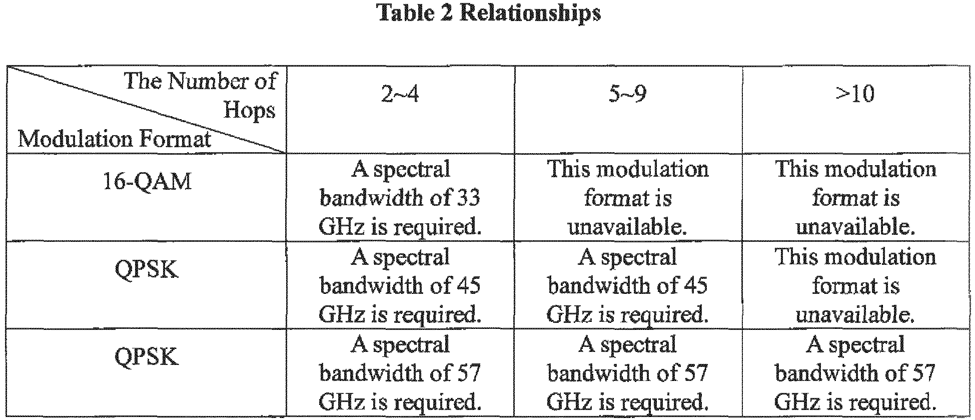

Given that both an R1 node on a client side and an R2 node on the client side support a 16-QAM modulation format of a spectral bandwidth of 33 GHz, and specifically, given that an interface between R1 and A supports a 16-QAM modulation format of a spectral bandwidth of 33 GHz and a QPSK modulation format of a spectral bandwidth of 45 GHz, an interface between R2 and B supports a 16-QAM modulation format of a spectral bandwidth of 33 GHz, a QPSK modulation format of a spectral bandwidth of 45 GHz, and a QPSK modulation format of a spectral bandwidth of 57 GHz, and the available spectral bandwidth in each link on the server side is adequate, a wavelength connection that occupies a spectral bandwidth of 33 GHz may be established between R1-A-C-B-R2 (4 hops).

If the available spectral bandwidth in an optical link of a path A-C-B is inadequate, the available spectral bandwidth in an optical link of a path A-D-E-F-B is adequate, and both the R1 node on the client side and the R2 node on the client support the QPSK modulation format of a spectral bandwidth of 45 GHz, a wavelength connection that occupies a spectral bandwidth of 45 GHz and passes A-D-E-F may be established between the R1 node on the client side and the R2 node on the client side.

A process for establishing the wavelength connection is implemented through RSVP signaling. The following describes in further detail the method for establishing a wavelength connection with adjustable spectral bandwidth.

Information in table 1 is unavailable in the R1 node on the client side and the R2 node on the client side because of information separation between the client side and a network side. In a call phase for establishing the wavelength connection, a modulation format and required spectral bandwidth are primarily negotiated.

Specifically, in the call phase, the R1 node on the client side sends a Notify (Notify) message to the R2 node on the client side. The Notify message carries modulation formats and required spectral bandwidths (16-QAM, 33 GHz; QPSK, 45 GHz) both of which are supported by the R1 node on the client side. The Notify message is a type of message in the Resource Reservation Protocol-Traffic Engineering (Resource Reservation Protocol with TE, RSVP-TE), and mutually sent by nodes at both ends to implement call processing.

After receiving the Notify message, the R2 node on the client side parses a list of modulation formats and required spectral bandwidths that is carried in the Notify message, compares the list with modulation formats and required spectral bandwidths both of which are supported by the local end, that is, the R2 node on the client side, takes an intersection between them, and selects a modulation format and a spectral bandwidth from the intersection, for example (16-QAM, 33 GHz), as the modulation format and the spectral bandwidth of the wavelength connection to be established, and returns the selected modulation format and spectral bandwidth to the R1 node on the client side through a Notify message.

After receiving the Notify message, the R2 node on the client side may also send information about all modulation formats and bandwidths that are supported by itself to the R1 node on the client side to let the R1 node on the client side select a modulation format and a spectral bandwidth.

After receiving the Notify message returned by the R2 node on the client side, the R1 node on the client side parses the modulation format and the required spectral bandwidth that are carried in the Notify message, and determines the modulation format and the spectral bandwidth of the wavelength connection to be established, that is, the modulation format and the spectral bandwidth that are selected by the R2 node on the client side. When the returned Notify message carries information about all modulation formats and spectral bandwidths that are supported by the R2 node on the client side, the R1 node on the client side further needs to compare modulation formats and spectral bandwidths supported by the local end with that supported by the R2 node on the client side, take an intersection between them, and select a modulation format and a spectral bandwidth from the intersection, for example, 16-QAM, 33 GHz, as the modulation format and the spectral bandwidth of the wavelength connection to be established.

Subsequently, the R1 node on the client side initiates, according to the modulation format and the required spectral bandwidth that are determined through negotiation, a signaling process for establishing the wavelength connection, thereby entering a phase for establishing the wavelength connection.

Specifically, the R1 node on the client side sends a signaling Path (Path) message to a node A on the network side, where the Path message specifies the determined modulation format and required spectral bandwidth of the wavelength connection to be established (16-QAM, 33 GHz). The Path message is a type of message in the Resource Reservation Protocol-Traffic Engineering (Resource Reservation Protocol with TE, RSVP-TE) and may be sent from a first node to a destination node along a calculated route so as to notify nodes along the route of establishment of the connection.

The node A on the network side receives the signaling Path message sent by the R1 node on the client side, and obtains path restriction information by looking up Table 2 according to the modulation format and required spectral bandwidth information (16-QAM, 33 GHz) of the wavelength connection to be established, where the modulation format and the required spectral bandwidth information are specified in the signaling path message. It can be learned by looking up Table 2 that there is a maximum of 4 hops, that is, hop restriction information is obtained. If other restriction information, for example, the length, exists in Table 2, the length restriction information also needs to be obtained.

The node A on the network side obtains through calculation a path A-C-B that meets the spectral bandwidth requirement and the hop restriction, and allocates a spectral resource, for example, 33 GHz requires three slots, and slots 1-3 may be allocated to the wavelength connection between the node R1 on the client side and the R2 node on the client side.

The node A on the network side continues to send the signaling Path message downstream along the calculated path A-C-B, that is, to a node C. The signaling Path message carries the 16-QAM modulation format and the allocated spectral resource slots 1-3 and the path A-C-B.

The signaling Path message is forwarded all the way to the R2 node on the client side along the path A-C-B. After receiving the forwarded signaling Path message, the R2 node on the client side sets its local modulation format and in-use spectral resource according to the 16-QAM modulation format and the spectral resource slot 1-slot 3 that are specified in the message, and returns a signaling Resv message to a previous node, that is, a node B. The Resv message is a type of message in RSVP-TE, is sent from a destination node to a source node, and may work with the Path message to establish a bidirectional connection.

The signaling Resv message is returned to the R1 node on the client side node by node along the original path B-C-A. In this process, all nodes on the network side establish a cross-connection between corresponding spectral resources, that is:
the node B connects optical signals corresponding to the spectral resource slot 1-slot 3 in an optical link C-B to optical signals corresponding to the spectral resource slot 1-slot 3 in an optical link B-R2;
the node C connects optical signals corresponding to the spectral resource slot 1-slot 3 in an optical link C-B to optical signals corresponding to the spectral resource slot 1-slot 3 in an optical link A-B; and
the node A connects optical signals corresponding to the spectral resource slot 1-slot 3 in an optical link A-B to optical signals corresponding to the spectral resource slots 1-3 in an optical link A-R1.

After receiving the returned Resv message, the R1 node on the client side sets its local modulation format and in-use spectral resource according to a spectral resource specified in the Resv message or a previously determined modulation format, and then the establishment of the wavelength connection is completed.

In the preceding call phase, extensions are made to the RSVP Notify (Notify) message, Path message, and Resv message to carry the modulation format and the spectral bandwidth.

Extension parts of the Notify message, the Path message, and the Resv message are shown in FIG. 5. Each line indicates 4 bytes (32 bits). Numbers in the top two lines are identifiers of bits (bits 0-31).

The value of the "Length" field takes byte as the unit and indicates the length of the whole object. The Length field may be used to deduce how many pieces of modulation format and bandwidth information the object carries. For example, if the value of the Length=8 bytes, this indicates that a piece of modulation format and bandwidth information is included; and if the value of the Length=12 bytes, this indicates that two pieces of modulation format and bandwidth information are included.

The "Class-Num" and "C-Type" fields are uniformly allocated by the IETF. Values of the two fields uniquely determine that the content of an extension part is the modulation format and bandwidth. For example, the following allocation may be made: Class-Num=81 and C-Type=1.

The "Modulation Format and Bandwidth" field occupies 4 bytes, and different values indicate different modulation formats and bandwidths. For example, the following values are defined: Modulation Format and Bandwidth=1, which indicates that the modulation format and the spectral bandwidth are 16-QAM and 33 GHz respectively; Modulation Format and Bandwidth=2, which indicates that the modulation format and the bandwidth is QSPK and 45 GHz respectively; and Modulation Format and Bandwidth=3, which indicates that the modulation format and the bandwidth is QPSK and 57 GHz respectively.

The modulation format and bandwidth information may also be carried in other ways, for example, different fields may be used to indicate the modulation format and the spectral bandwidth.

The method for establishing a wavelength connection with adjustable spectral bandwidth may also be not used in the call phase to implement negotiation of a modulation format and required spectral bandwidth between both ends. For example, when a network management system delivers a wavelength connection establishment command to the R1 node on the client side, the network management system specifies a modulation format and required spectral bandwidth at both ends of the wavelength connection to be established. Subsequently, the phase for establishing the wavelength connection is similar to the process for establishing the wavelength connection that starts from sending, by the R1 node on the client side, the Path message.

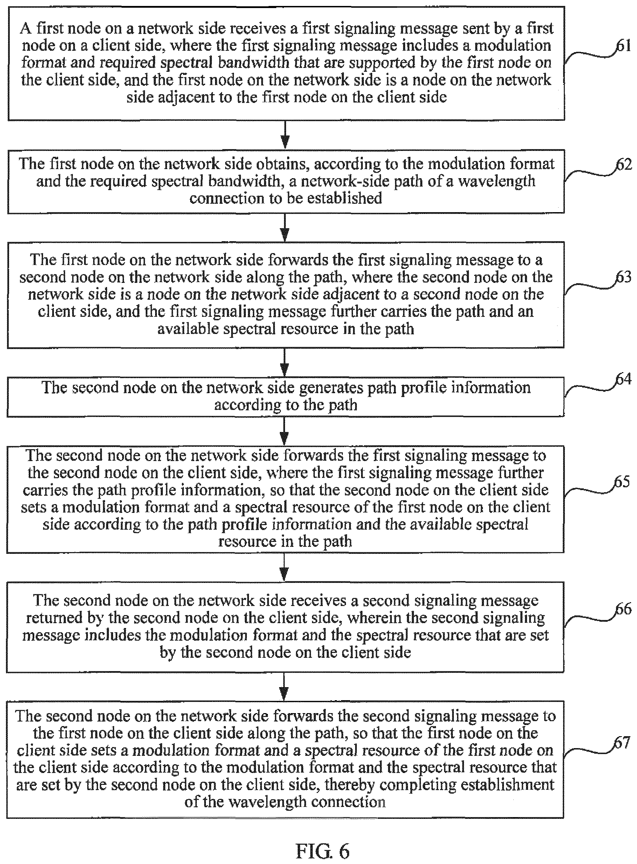

The method for establishing a wavelength connection with adjustable spectral bandwidth may also be used in the process for establishing the wavelength connection to determine a modulation format and required spectral bandwidth at both ends so as to implement effective allocation of spectral resources. As shown in FIG 6, the method includes:
Step 61: A first node on a network side receives a first signaling message sent by a first node on a client side, where the first signaling message includes a modulation format and required spectral bandwidth that are supported by the first node on the client side, and the first node on the network side is a node on the network side adjacent to the first node on the client side.
Step 62: The first node on the network side obtains, according to the modulation format and the required spectral bandwidth, a network-side path of a wavelength connection to be established.
Step 63: The first node on the network side forwards the first signaling message to a second node on the network side along the path, where the second node on the network side is a node on the network side adjacent to a second node on the client side, and the first signaling message further carries the path and an available spectral resource in the path.
Step 64: The second node on the network side generates path profile information according to the path.
Step 65: The second node on the network side forwards the first signaling message to the second node on the client side, where the first signaling message further carries the path profile information, so that the second node on the client side sets a modulation format and a spectral resource of the first node on the client side according to the path profile information and the available spectral resource in the path.
Step 66: The second node on the network side receives a second signaling message returned by the second node on the client side, where the second signaling message includes the modulation format and the spectral resource that are set by the second node on the client side.
Step 67: The second node on the network side forwards the second signaling message to the first node on the client side along the path, so that the first node on the client side sets a modulation format and a spectral resource of the first node on the client side according to the modulation format and the spectral resource that are set by the second node on the client side, thereby completing establishment of the wavelength connection.

In this embodiment, nodes on the client side at both ends of a wavelength connection to be established determine a modulation format and a spectral bandwidth in a process for establishing the wavelength connection, and a node device on a network side allocates a spectral resource according to the modulation format and the required spectral bandwidth that are supported by the nodes on the client side. This solves the problem of ineffective allocation of spectral resources caused by information separation between the network side and the client side, enables the node on the network side to allocate the minimum spectral resources to each wavelength connection, and implements effective allocation of spectral resources.

Similar to the embodiments shown in FIG. 1-FIG. 3, the first signaling message and the second signaling message are RSVP messages that include extension fields. The content carried in the extension field includes at least the specified modulation format and required spectral bandwidth of the wavelength connection to be established. For details about the extension field, see descriptions in the preceding embodiments.

The process in which the first node on the network side obtains, according to the modulation format and the required spectral bandwidth, a network-side path of the wavelength connection to be established is similar to the method provided in the embodiments shown in FIG 1-FIG. 3. For example, the process may include:
obtaining, by the first node on the network side, path restriction information according to the modulation format and the required spectral bandwidth that are supported by the first node on the client side; and
obtaining, by the first node on the network side by using the path restriction information and the required spectral bandwidth, the network-side path of the wavelength connection to be established that meets the path restriction information.

The network shown in FIG. 4 is still taken as application environment to describe in further detail the method for establishing a wavelength connection with adjustment spectral bandwidth. The method specifically includes:

An R1 node on the client side sends a signaling Path message to a node A on the network side, where the signaling Path message specifies a modulation format and required spectral bandwidth that are supported by the local end, that is, the R1 node on the client side, such as 16-QAM, 33 GHz or QPSK, 45 GHz. The extension part shown in FIG. 5 may be added into the signaling Path message so as to carry the modulation format and the required spectral bandwidth that are supported by the R1 node on the client side.

After receiving the signaling Path message sent by the R1 node on the client side, the node A on the network side looks up Table 2 and obtains that path restriction information corresponding to 16-QAM, 33 GHz and QPSK, 45 GHz is 2-4 hops and the required spectral bandwidth is at least 45 GHz. As the width of each slot is 12.5 GHz, at least four slots needs to be occupied. According to Table 1, the available spectral resource between all nodes on the network side includes at least slots 1-5. This meets the requirement of the R1 node on the client side. As a result, the network-side path of the wavelength connection to be established may be A-C-B and may also be A-D-E-F-B. The shortest path A-C-B is selected as a path for data transmission. After looking up Table 1 and obtaining that the available spectral resource in the path A-C-B is slot 1-slot 5, the node A on the network side sends a signaling Path message downstream, where the signaling Path message carries the path A-D-E-F-B, the available spectral resource information slot 1-slot 5, and modulation formats supported by the R1 node on the client side.

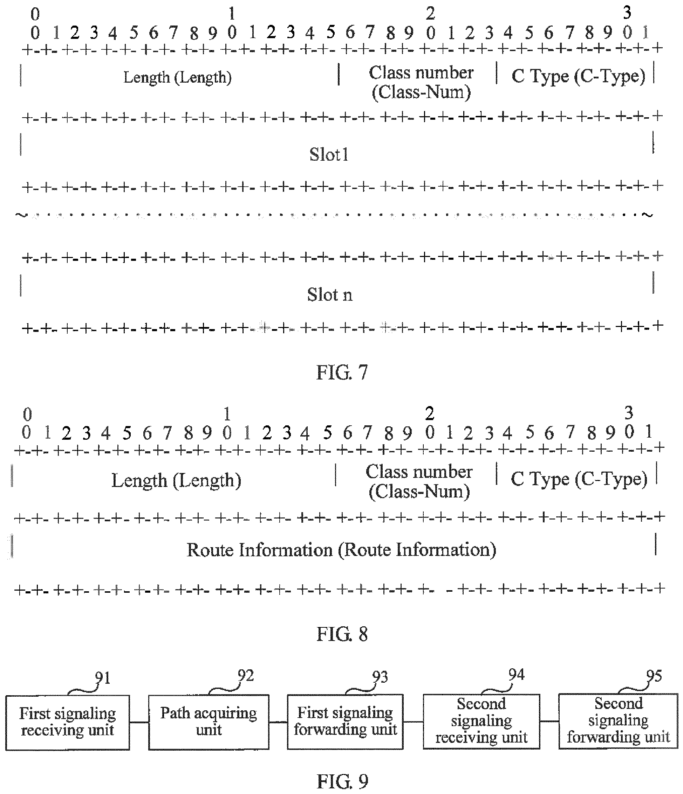

Specifically, an extension may be further made to the signaling Path message so as to carry the available spectral resource. The extension part is shown in FIG. 7, where the "Length" field takes byte as the unit and indicates the length of the whole object. The length (Length) of the object is constantly 8. The "Class-Num" and "C-Type" fields are uniformly allocated by the IETF, for example, the following allocation may be made to indicate a path information object of "The Number of Hops": Class-Num=80 and C-Type=1, where the value of path information "Route Information" indicates the number of hops in the path; and the allocation of Class-Num=80 and C-Type=2 is made to indicate a path information object of "Length", where the value of "Route Information" indicates the length of the path.

The "slot 1-slot n" field indicates the available spectral bandwidth, and each slot represents a frequency band. For example, given that each slot has a spectral bandwidth resource of 12.5 GHz and the start frequency is 193.1 THz, slot 1 indicates a frequency band with a frequency of 193.1 THz and a width of 12.5 GHz, and slot 2 indicates a frequency band with a frequency of 193.1125 THz and a width of 12.5 GHz.

The signaling Path message is forwarded all the way to a node B on the network side along the path A-C-B. The node B on the network side needs to provide required path profile information, such as 2 hops and the length, for an R2 node on the client side, so that the R2 node on the client side sets an appropriate modulation format and spectral bandwidth. The path profile information may be carried in the signaling Path message sent to the R2 node on the client side.

The extension part shown in FIG. 8 may also be added to the signaling Path message to carry the path profile information. As shown in FIG. 8, the "Length" field takes byte as the unit and indicates the length of the whole object. The "Length" field may be used to deduce how many available spectral bandwidths are carried by the object, that is, the number of slots. For example, if Length=8 bytes, this indicates that one slot is included, and if Length=12 bytes, this indicates that two slots are included.

The "Class-Num" and "C-Type" fields are uniformly allocated by the IETF. For example, the following allocation may be made: Class-Num=82 and C-Type=1. The two values uniquely determine that the content carried in the extension part is the preceding available spectral bandwidths.

The R2 node on the client side receives the signaling Path message, looks up Table 2 according to available modulation format and required spectral bandwidth information carried in the signaling Path message, as well as according to the path profile information, that is, 2 hops, sets the available modulation format, for example, QPSK and 45 GHz, and selects a spectral resource from the available spectral resource information. As 45 GHz requires 4 slots, four consecutive slots, for example, slots 1-4 may be selected from the available spectral resource as a spectral resource used in the wavelength connection. In addition, a signaling Resv message is returned to a previous node, where the signaling Resv message carries information such as the selected spectral resource and modulation format. When all modulation formats supported by the R2 node on the client side meet the hop restriction, a modulation format that occupies the minimum resources and is supported by the R1 node on the client side may be selected.

The signaling Resv message is returned node by node to the R1 node on the client side along the original path B-C-A. In this process, all nodes on the server side establish a cross-connection between corresponding spectral resources (slot 1-slot 4).

The R1 node on the client side receives the returned signaling Resv message, and sets a modulation format and an in-use spectral resource of the local end, that is, the R1 node on the client side, thereby completing establishment of the wavelength connection.

In the preceding method embodiment, when information on the client side is separated from that on the network side, both ends of a wavelength connection may automatically set an appropriate modulation format and spectral bandwidth according to path information, for example, information about the number of hops, the length, and an available spectral resource, thereby implementing effective usage of spectral resources on the network side.

A person skilled in the art may understand that all or a part of the steps in the method embodiments may be implemented by a program instructing relevant hardware. The program may be stored in a computer readable storage medium. When the program is executed, the steps in the method embodiments are performed. The storage medium includes any medium that is capable of storing program codes, such as a ROM, a RAM, a magnetic disk, or a compact disk.

FIG 9 is a schematic structural diagram of a node device on a network side for establishing a wavelength connection with adjustable spectral bandwidth according to an embodiment of the present invention. As shown in FIG 9, the node device on the network side includes: a first signaling receiving unit 91, a path acquiring unit 92, a first signaling forwarding unit 93, a second signaling receiving unit 94, and a second signaling forwarding unit 95, where:
the first signaling receiving unit 91 is configured to receive a first signaling message sent by a first node on a client side, where the first signaling message includes at least a specified modulation format and required spectral bandwidth of a wavelength connection to be established;
the path acquiring unit 92 is configured to obtain, through calculation according to the specified modulation format and required spectral bandwidth of the wavelength connection to be established, a network-side path of the wavelength connection to be established, and allocate a spectral resource;
the first signaling forwarding unit 93 is configured to forward, by the node on the network side, the first signaling message to a second node on the client side along the path, where the first signaling message carries the allocated spectral resource, so that the second node on the client side sets a modulation format and a spectral resource of the second node on the client side according to the specified modulation format of the wavelength connection to be established and the allocated spectral resource;
the second signaling receiving unit 94 is configured to receive a second signaling message returned by the second node on the client side, where the second signaling message includes the modulation format and the spectral resource that are set by the second node on the client side; and
the second signaling forwarding unit 95 is configured to return the second signaling message to the first node on the client side along the path, so that the first node on the client side sets a modulation format and a spectral resource of the first node on the client side according to the modulation format and the spectral resource that are set by the second node on the client side, thereby completing establishment of the wavelength connection.

The specified modulation format and required spectral bandwidth of the wavelength connection to be established are determined by the first node on the client side and the second node on the client side through negotiation in a call phase, or specified by a third party.

The first signaling message and the second signaling message are RSVP messages that include extension fields. In the first signaling message, the content carried in the extension field includes at least the specified modulation format and required spectral bandwidth of the wavelength connection to be established. In the second signaling message, the content carried in the extension field includes at least the modulation format and the spectral resource that are set by the second node on the client side. The extension field includes the length of the carried content, a content type identifier and the content. For details, see descriptions in the preceding method embodiments.

When the first signaling message does not carry path restriction information, the path acquiring unit 102 may include: a path restriction acquiring sub-unit and a path acquiring sub-unit, where:
the path restriction acquiring sub-unit is configured to obtain the path restriction information according to the specified modulation format and required spectral bandwidth of the wavelength connection to be established, where the modulation format and the spectral bandwidth are in the first signaling message; and
the path acquiring sub-unit is configured to obtain, by using the path restriction information and the specified required spectral bandwidth, the network-side path of the wavelength connection to be established that meets the path restriction information.

When the first signaling message further includes the path restriction information, the path acquiring unit may specifically be configured to obtain, by using the path restriction information and the specified required spectral bandwidth, the network-side path of the wavelength connection to be established that meets the path restriction information.

In this embodiment, the node on the network side allocates, by using a path acquiring unit, a spectral resource to a wavelength connection according to a modulation format and required spectral bandwidth of the wavelength connection to be established, where the modulation format and the required spectral bandwidth are specified in a first signaling message sent by one end of the wavelength connection to be established, that is, a first node on a client side, and provides the allocated spectral resource for the other end of the wavelength connection to be established, that is, a second node on the client side, so that the second node on the client side sets its local modulation format and spectral resource according to the modulation format specified by the first node on the client side and the spectral resource allocated by the node on the network side, and notifies the first node on the client side through the network side; and then, the first node on the client side makes modulation format and spectral resource settings matching those of the second node on the client side. This solves the problem of ineffective allocation of spectral resources caused by information separation between the network side and the client side, enables the node on the network side to allocate the minimum spectral resources to each wavelength connection, and implements effective allocation of spectral resources.

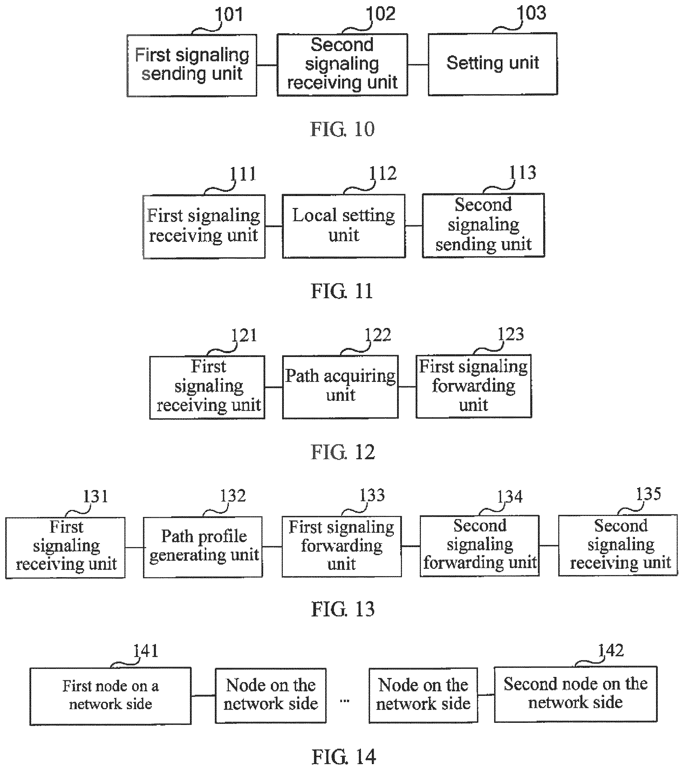

FIG. 10 is a schematic structural diagram of a node device on a client side for establishing a wavelength connection with adjustable spectral bandwidth according to an embodiment of the present invention. In this embodiment, the node device on the client side is the first node on the client side in the preceding method embodiments. For details, see descriptions in the preceding method embodiments. As shown in FIG. 10, the node device on the client side includes: a first signaling sending unit 101, a second signaling receiving unit 102, and a setting unit 103, where:
the first signaling sending unit 101 is configured to send a first signaling message to a node on a network side, where the first signaling message includes at least a specified modulation format and required spectral bandwidth of a wavelength connection to be established, so that the node on the network side obtains, through calculation according to the first signaling message, a network-side path along which the first signaling message is forwarded, allocates a spectral resource, and sends the first signaling message that carries the allocated spectral resource to a second node on the client side along the path, and then, the second node on the client side sets a modulation format and a spectral resource of the second node on the client side according to the specified modulation format of the wavelength connection to be established and the allocated spectral resource, and returns a second signaling message, where the second signaling message includes the modulation format and the spectral resource that are set by the second node on the client side;
the second signaling receiving unit 102 is configured to receive the second signaling message; and
the setting unit 103 is configured to set its local modulation format and spectral resource according to the modulation format and the spectral resource that are set by the second node on the client side, thereby completing establishment of the wavelength connection.

In this embodiment, the node device on the client side sends a first signaling message to a node on a network side by using a first signaling sending unit, where a specified modulation format and required spectral bandwidth of a wavelength connection to be established are set in the first signaling message, so that the node on the network side allocates a spectral resource to the wavelength connection according to the specified modulation format and the required spectral bandwidth of the wavelength connection to be established, where the modulation format and the required spectral bandwidth are in the first signaling message sent by one end of the wavelength connection to be established, that is, a first node on the client side, and provides the allocated spectral resource for the other end of the wavelength connection to be established, that is, a second node on the client side; then, the second node on the client side sets its local modulation format and spectral resource according to the modulation format specified by the first node on the client side and the spectral resource allocated by the node on the network side, and notifies the first node on the client side through the network side; and then, the first node on the client side makes modulation format and spectral resource settings matching those of the second node on the client side. This solves the problem of ineffective allocation of spectral resources caused by information separation between the network side and the client side, enables the node on the network side to allocate the minimum spectral resources to each wavelength connection, and implements effective allocation of spectral resources.

FIG 11 is a schematic structural diagram of another node device on a client side for establishing a wavelength connection with adjustable spectral bandwidth according to an embodiment of the present invention. In this embodiment, the node device on the client side is the second node on the client side in the preceding method embodiments. For details, see descriptions in the preceding method embodiments. As shown in FIG. 11, the node device on the client side includes: a first signaling receiving unit 111, a local setting unit 112, and a second signaling sending unit 113, where:
the first signaling receiving unit 111 is configured to receive a first signaling message forwarded by a node on a network side, where the first signaling message includes at least a specified modulation format and required spectral bandwidth of a wavelength connection to be established, and further carries a spectral resource allocated by the node on the network side;
the local setting unit 112 is configured to set a modulation format and a spectral resource of the node on the client side according to the specified modulation format of the wavelength connection to be established and the allocated spectral resource; and
the second signaling sending unit 113 is configured to return a second signaling message to the node on the network side, where the second signaling message includes the modulation format and the spectral resource that are set by the local setting unit, so that the node on the network side returns the second signaling message to a first node on the client side, and then, the first node on the client side sets a modulation format and a spectral resource of the first node on the client side according to the modulation format and the spectral resource that are in the second signaling message, thereby completing establishment of the wavelength connection.

In this embodiment, the node device on the client side sets, by using a local setting unit, its local modulation format and spectral resource according to a modulation format specified by a first node on the client side and a spectral resource allocated by a node on a network side, and notifies the first node on the client side through the network side, so that the first node on the client side makes modulation format and spectral resource settings matching those of a second node on the client side. This solves the problem of ineffective allocation of spectral resources caused by information separation between the network side and the client side, enables the node on the network side to allocate the minimum spectral resources to each wavelength connection, and implements effective allocation of spectral resources.

FIG. 12 is a schematic structural diagram of another node device on a network side for establishing a wavelength connection with adjustable spectral bandwidth according to an embodiment of the present invention. In this embodiment, the node device on the network side is a node on the network side adjacent to the first node on the client side in the preceding method embodiments. For details, see descriptions in the preceding method embodiments. As shown in FIG. 12, the node device on the network side includes: a first signaling receiving unit 121, a path acquiring unit 122, and a first signaling forwarding unit 123, where:
the first signaling receiving unit 121 is configured to receive a first signaling message sent by the first node on the client side, where the first signaling message includes a modulation format and required spectral bandwidth that are supported by the first node on the client side;
the path acquiring unit 122 is configured to obtain, according to the modulation format and the required spectral bandwidth, a network-side path of a wavelength connection to be established; and
the first signaling forwarding unit 123 is configured to forward the first signaling message to a second node on the network side along the path, where the second node on the network side is a node on the network side adjacent to a second node on the client side, and the first signaling message further carries the path and an available spectral resource in the path, so that the second node on the network side generates path profile information according to the path and forwards the first signaling message to the second node on the client side, where the first signaling message further carries the path profile information; then, the second node on the client side sets a modulation format and a spectral resource of the second node on the client side according to the path profile information and the available spectral resource in the path and returns a second signaling message, where the second signaling message includes the modulation format and the spectral resource that are set by the second node on the client side; and then, the first node on the client side sets a modulation format and a spectral resource of the first node on the client side according to the modulation format and the spectral resource that are set by the second node on the client side, thereby completing establishment of the wavelength connection.

In this embodiment, the node device on the network side implements, by using a first signaling receiving unit, a path acquiring unit, and a first signaling forwarding unit, allocation of a spectral resource, and coordination and consistency between modulation formats and spectral resources at both ends of a first wavelength connection to be established. This solves the problem of ineffective allocation of spectral resources caused by information separation between the network side and the client side, enables the node on the network side to allocate the minimum spectral resources to each wavelength connection, and implements effective allocation of spectral resources.

FIG 13 is a schematic structural diagram of still another node device on a network side for establishing a wavelength connection with adjustable spectral bandwidth according to an embodiment of the present invention. In this embodiment, the node device on the network side is a node on the network side adjacent to the second node on the client side in the preceding method embodiments. For details, see descriptions in the preceding method embodiments. As shown in FIG. 13, the node device on the network side includes: a first signaling receiving unit 131, a path profile generating unit 132, a first signaling forwarding unit 133, a second signaling receiving unit 134, and a second signaling forwarding unit 135, where:
the first signaling receiving unit 131 is configured to receive a first signaling message forwarded by a first node on the network side, where the first node on the network side is a node on the network side adjacent to a first node on the client side, the first signaling message includes a modulation format and required spectral bandwidth that are supported by the first node on the client side and further carries a network-side path of a wavelength connection to be established and an available spectral resource in the path, and the modulation format and the required spectral bandwidth are a modulation format and required spectral bandwidth that are supported by the first node on the client side and sent by the first node on the client side to the first node on the network side through the first signaling message;
the path profile generating unit 132 is configured to generate path profile information according to the network-side path of the wavelength connection to be established;
the first signaling forwarding unit 133 is configured to forward the first signaling message to a second node on the client side, where the first signaling message further carries the path profile information, so that the second node on the client side sets a modulation format and a spectral resource of the second node on the client side according to the path profile information and the available spectral resource in the path;
the second signaling receiving unit 134 is configured to receive a second signaling message returned by the second node on the client side, where the second signaling message includes the modulation format and the spectral resource that are set by the second node on the client side; and
the second signaling forwarding unit 135 is configured to forward the second signaling message to the first node on the client side along the path, so that the first node on the client side sets a modulation format and a spectral resource of the first node on the client side according to the modulation format and the spectral resource that are set by the second node on the client side, thereby completing establishment of the wavelength connection.

In this embodiment, the node device on the network side implements, by using a first signaling receiving unit, a first signaling forwarding unit, a second signaling receiving unit, and a second signaling forwarding unit, allocation of a spectral resource, and coordination and consistency between modulation formats and spectral resources at both ends of a first wavelength connection to be established. This solves the problem of ineffective allocation of spectral resources caused by information separation between the network side and the client side, enables the node on the network side to allocate the minimum spectral resources to each wavelength connection, and implements effective allocation of spectral resources.

FIG 14 is a schematic structural diagram of a network for establishing a wavelength connection with adjustable spectral bandwidth according to an embodiment of the present invention. As shown in FIG. 14, the network includes a first node 141 on a network side and a second node 142 on the network side, where: the first node 141 on the network side is a network-side node device on the network side adjacent to the first node on the client side in the preceding embodiments and may be the node device on the network side in the device embodiment shown in FIG. 12; and the second node 142 on the network side is a network-side node device on the network side adjacent to the second node on the client side in the preceding embodiments and may be the node device on the network side in the device embodiment shown in FIG. 13.

In this embodiment, a node on a network side allocates a spectral resource to a wavelength connection according to a modulation format and required spectral bandwidth of the wavelength connection to be established, where the modulation format and the required spectral bandwidth are specified in a first signaling message sent by one end of the wavelength connection to be established, that is, a first node on a client side, and provides the allocated spectral resource for the other end of the wavelength connection to be established, that is, a second node on the client side, so that the second node on the client side sets its local modulation format and spectral resource according to the modulation format specified by the first node on the client side and the spectral resource allocated by the node on the network side, and notifies the first node on the client side through the network side; and then, the first node on the client side makes modulation format and spectral resource settings matching those of the second node on the client side. This solves the problem of ineffective allocation of spectral resources caused by information separation between the network side and the client side, enables the node on the network side to allocate the minimum spectral resources to each wavelength connection, and implements effective allocation of spectral resources.

Finally, it should be noted that the foregoing embodiments are merely intended for describing the technical solutions of the present invention rather than limiting the present invention. Although the present invention is described in detail with reference to the foregoing embodiments, a person of ordinary skill in the art should understand that they may still make modifications to the technical solutions described in the foregoing embodiments, or make equivalent replacements to part of technical features thereof, without departing from the scope of the technical solutions of the embodiments of the present invention.

## Claims

1. A method for establishing a wavelength connection with adjustable spectral bandwidth, comprising:
receiving (11), by a first node on a network side, a first signaling message sent by a first node on a client side, wherein the first signaling message comprises a specified modulation format and required spectral bandwidth of a wavelength connection to be established, wherein the first node on the network side is a node on the network side adjacent to the first node on the client side;
obtaining (12), by the first node on the network side through calculation according to the specified modulation format and required spectral bandwidth of the wavelength connection to be established, a network-side path of the wavelength connection to be established, and allocating a spectral resource according to the specified modulation format and required spectral bandwidth of the wavelength connection to be established;
forwarding (13), by the first node on the network side, the first signaling message to a second node on the network side along the path, wherein the second node on the network side is a node on the network side adjacent to a second node on the client side, wherein the first signaling message carries the allocated spectral resource;
forwarding (13), by the second node on the network side, the first signaling message to the second node on the client side, wherein the first signaling message carries the allocated spectral resource, so that the second node on the client side sets a modulation format and a spectral resource of the second node on the client side according to the specified modulation format of the wavelength connection to be established and the allocated spectral resource;
receiving (14), by the first node on the network side, a second signaling message returned by the second node on the client side, wherein the second signaling message comprises the modulation format and the spectral resource that are set by the second node on the client side; and
returning (15), by the first node on the network side, the second signaling message to the first node on the client side, so that the first node on the client side sets a modulation format and a spectral resource of the first node on the client side according to the modulation format and the spectral resource that are set by the second node on the client side, thereby completing establishment of the wavelength connection.

2. The method for establishing a wavelength connection with adjustable spectral bandwidth according to claim 1, wherein the specified modulation format and required spectral bandwidth of the wavelength connection to be established are determined by the first node on the client side and the second node on the client side through negotiation at a call phase, or specified by a third party.

3. The method for establishing a wavelength connection with adjustable spectral bandwidth according to claim 1, wherein the first signaling message and the second signaling message are RSVP messages that comprise an extension field, in the first signaling message, the content carried in the extension field comprises the specified modulation format and required spectral bandwidth of the wavelength connection to be established; and in the second signaling message, the content carried in the extension field comprises the modulation format and the spectral resource that are set by the second node on the client side.

4. The method for establishing a wavelength connection with adjustable spectral bandwidth according to claim 3, wherein the extension field comprises the length of the carried content, a content type identifier, and the content.

5. The method for establishing a wavelength connection with adjustable spectral band-width according to any one of claims 1-4, wherein the process in which the first node on the network side obtains, through calculation according to the specified modulation format and required spectral bandwidth of the wavelength connection to be established, the network-side path of the wavelength connection to be established comprises:
obtaining, by the first node on the network side, path restriction information according to the specified modulation format and required spectral bandwidth of the wavelength connection to be established, wherein the modulation format and the required spectral bandwidth are in the first signaling message; and
obtaining, by the first node on the network side, by using the path restriction information and the specified required spectral bandwidth, the network-side path of the wavelength connection to be established that meets the path restriction information.

6. The method for establishing a wavelength connection with adjustable spectral bandwidth according to any one of claims 1-4, wherein the first signaling message that is received by the first node on the network side and sent by the first node on the client side further comprises path restriction information; and
the process in which the first node on the network side obtains, through calculation according to the specified modulation format and required spectral bandwidth of the wavelength connection to be established, the network-side path of the wavelength connection to be established comprises: obtaining, by the first node on the network side, by using the path restriction information and the specified required spectral bandwidth, the network-side path of the wavelength connection to be established that meets the path restriction information.

7. A first node device on a network side for establishing a wavelength connection with adjustable spectral bandwidth, comprising:
a first signaling receiving unit (91), configured to receive a first signaling message sent by a first node on a client side, wherein the first signaling message comprises a specified modulation format and required spectral bandwidth of a wavelength connection to be established, wherein the first node on the network side is a node on the network side adjacent to the first node on the client side;
a path acquiring unit (92), configured to obtain through calculation according to the specified modulation format and required spectral bandwidth of the wavelength connection to be established, a network-side path of the wavelength connection to be established, and allocate a spectral resource according to the specified modulation format and required spectral bandwidth of the wavelength connection to be established;
a first signaling forwarding unit (93), configured to forward the first signaling message to a second node on the network side along the path, wherein the second node on the network side is a node on the network side adjacent to a second node on the client side,
wherein the first signaling message carries the allocated spectral resource so that the second node on the client side sets a modulation format and a spectral resource of the second node on the client side according to the specified modulation format of the wavelength connection to be established and the allocated spectral resource;
a second signaling receiving unit (94), configured to receive a second signaling message returned by the second node on the client side, wherein the second signaling message comprises the modulation format and the spectral resource that are set by the second node on the client side; and
a second signaling forwarding unit (95), configured to return the second signaling message to the first node on the client side, so that the first node on the client side sets a modulation format and a spectral resource of the first node on the client side according to the modulation format and the spectral resource that are set by the second node on the client side, thereby completing establishment of the wavelength connection.

8. The node device on the network side for establishing a wavelength connection with adjustable spectral bandwidth according to claim 7 wherein the specified modulation format and required spectral bandwidth of the wavelength connection to be established are determined by the first node on the client side and the second node on the client side through negotiation at a call phase, or specified by a third party.

9. The node device on the network side for establishing a wavelength connection with adjustable spectral bandwidth according to claim 7, wherein the first signaling message and the second signaling message are RSVP messages that comprise an extension field, in the first signaling message, the content carried in the extension field comprises the specified modulation format and required spectral bandwidth of the wavelength connection to be established; and in the second signaling message, the content carried in the extension field comprises the modulation format and the spectral resource that are set by the second node on the client side.

10. The node device on the network side for establishing a wavelength connection with adjustable spectral bandwidth according to claim 9, wherein the extension field comprises the length of the carried content, a content type identifier, and the content.

11. The node device on the network side for establishing a wavelength connection with adjustable spectral bandwidth according to any one of claims 7-10, wherein the path acquiring unit comprises:
a path restriction acquiring sub-unit, configured to obtain path restriction information according to the specified modulation format and required spectral bandwidth of the wavelength connection to be established, wherein the modulation format and the spectral bandwidth are in the first signaling message; and
a path acquiring sub-unit, configured to obtain, by using the path restriction information and the specified required spectral bandwidth, the network-side path of the wavelength connection to be established that meets the path restriction information.

12. The node device on the network side for establishing a wavelength connection with adjustable spectral bandwidth according to any one of claims 7-10, wherein the first signaling message further comprises path restriction information, and the path acquiring unit is specifically configured to obtain, by using the path restriction information and the specified required spectral bandwidth, the network-side path of the wavelength connection to be established that meets the path restriction information.

## Patentansprüche

1. Verfahren zur Herstellung einer Wellenlängenverbindung mit einstellbarer spektraler Bandbreite, umfassend:
Empfangen (11), durch einen ersten Knoten auf einer Netzseite, einer ersten Signalisierungsnachricht, die von einem ersten Knoten auf einer Clientseite gesendet wurde, wobei die erste Signalisierungsnachricht ein spezifiziertes Modulationsformat und eine geforderte spektrale Bandbreite einer herzustellenden Wellenlängenverbindung umfasst, wobei der erste Knoten auf der Netzseite ein Knoten auf der Netzseite ist, der dem ersten Knoten auf der Clientseite benachbart ist;
Gewinnen (12), durch den ersten Knoten auf der Netzseite durch Berechnung gemäß dem spezifizierten Modulationsformat und der geforderten spektralen Bandbreite der herzustellenden Wellenlängenverbindung, eines netzseitigen Weges der herzustellenden Wellenlängenverbindung, und Zuweisen einer spektralen Ressource gemäß dem spezifizierten Modulationsformat und der geforderten spektralen Bandbreite der herzustellenden Wellenlängenverbindung;
Weiterleiten (13), durch den ersten Knoten auf der Netzseite, der ersten Signalisierungsnachricht an einen zweiten Knoten auf der Netzseite entlang des Weges, wobei der zweite Knoten auf der Netzseite ein Knoten auf der Netzseite ist, der einem zweiten Knoten auf der Clientseite benachbart ist, wobei die erste Signalisierungsnachricht die zugewiesene spektrale Ressource transportiert;
Weiterleiten (13), durch den zweiten Knoten auf der Netzseite, der ersten Signalisierungsnachricht an den zweiten Knoten auf der Clientseite, wobei die erste Signalisierungsnachricht die zugewiesene spektrale Ressource transportiert, sodass der zweite Knoten auf der Clientseite ein Modulationsformat und eine spektrale Ressource des zweiten Knotens auf der Clientseite gemäß dem spezifizierten Modulationsformat der herzustellenden Wellenlängenverbindung und der zugewiesenen spektralen Ressource einstellt;
Empfangen (14), durch den ersten Knoten auf der Netzseite, einer zweiten Signalisierungsnachricht, die vom zweiten Knoten auf der Clientseite zurückgesendet wurde, wobei die zweite Signalisierungsnachricht das Modulationsformat und die spektrale Ressource umfasst, die vom zweiten Knoten auf der Clientseite eingestellt werden; und
Zurücksenden (15), durch den ersten Knoten auf der Netzseite, der zweiten Signalisierungsnachricht an den ersten Knoten auf der Clientseite, sodass der erste Knoten auf der Clientseite ein Modulationsformat und eine spektrale Ressource des ersten Knotens auf der Clientseite gemäß dem Modulationsformat und der spektralen Ressource einstellt, welche vom zweiten Knoten auf der Clientseite eingestellt werden, wodurch die Herstellung der Wellenlängenverbindung abgeschlossen wird.

2. Verfahren zur Herstellung einer Wellenlängenverbindung mit einstellbarer spektraler Bandbreite gemäß Anspruch 1, wobei das spezifizierte Modulationsformat und die geforderte spektrale Bandbreite der herzustellenden Wellenlängenverbindung vom ersten Knoten auf der Clientseite und dem zweiten Knoten auf der Clientseite durch Verhandlung in einer Rufphase bestimmt oder von einer dritten Partei spezifiziert werden.

3. Verfahren zur Herstellung einer Wellenlängenverbindung mit einstellbarer spektraler Bandbreite gemäß Anspruch 1, wobei die erste Signalisierungsnachricht und die zweite Signalisierungsnachricht RSVP-Nachrichten sind, welche ein Erweiterungsfeld umfassen, in der ersten Signalisierungsnachricht der im Erweiterungsfeld transportierte Inhalt das spezifizierte Modulationsformat und die geforderte spektrale Bandbreite der herzustellenden Wellenlängenverbindung umfasst und in der zweiten Signalisierungsnachricht der im Erweiterungsfeld transportierte Inhalt das Modulationsformat und die spektrale Ressource umfasst, welche vom zweiten Knoten auf der Clientseite eingestellt werden.

4. Verfahren zur Herstellung einer Wellenlängenverbindung mit einstellbarer spektraler Bandbreite gemäß Anspruch 3, wobei das Erweiterungsfeld die Länge des transportierten Inhalts, eine Inhaltstypkennung und den Inhalt umfasst.

5. Verfahren zur Herstellung einer Wellenlängenverbindung mit einstellbarer spektraler Bandbreite gemäß einem der Ansprüche 1-4, wobei der Prozess, in welchem der erste Knoten auf der Netzseite durch Berechnung gemäß dem spezifizierten Modulationsformat und der geforderten spektralen Bandbreite der herzustellenden Wellenlängenverbindung den netzseitigen Weg der herzustellenden Wellenlängenverbindung gewinnt, umfasst:
Gewinnen, durch den ersten Knoten auf der Netzseite, von Wegbeschränkungsinformationen gemäß dem spezifizierten Modulationsformat und der geforderten spektralen Bandbreite der herzustellenden Wellenlängenverbindung, wobei das Modulationsformat und die geforderte spektrale Bandbreite in der ersten Signalisierungsnachricht enthalten sind; und
Gewinnen, durch den ersten Knoten auf der Netzseite, mithilfe der Wegbeschränkungsinformationen und der spezifizierten geforderten spektralen Bandbreite, des netzseitigen Weges der herzustellenden Wellenlängenverbindung, welcher den Wegbeschränkungsinformationen genügt.

6. Verfahren zur Herstellung einer Wellenlängenverbindung mit einstellbarer spektraler Bandbreite gemäß einem der Ansprüche 1-4, wobei die erste Signalisierungsnachricht, welche durch den ersten Knoten auf der Netzseite empfangen wird und vom ersten Knoten auf der Clientseite gesendet wird, ferner Wegbeschränkungsinformationen umfasst; und
der Prozess, in welchem der erste Knoten auf der Netzseite durch Berechnung gemäß dem spezifizierten Modulationsformat und der geforderten spektralen Bandbreite der herzustellenden Wellenlängenverbindung den netzseitigen Weg der herzustellenden Wellenlängenverbindung gewinnt, umfasst: Gewinnen, durch den ersten Knoten auf der Netzseite, mithilfe der Wegbeschränkungsinformationen und der spezifizierten geforderten spektralen Bandbreite, des netzseitigen Weges der herzustellenden Wellenlängenverbindung, welcher den Wegbeschränkungsinformationen genügt.

7. Erste Knotenvorrichtung auf einer Netzseite zur Herstellung einer Wellenlängenverbindung mit einstellbarer spektraler Bandbreite, umfassend:
eine erste Signalisierungsempfangseinheit (91), die dafür ausgelegt ist, eine erste Signalisierungsnachricht zu empfangen, die von einem ersten Knoten auf einer Clientseite gesendet wurde, wobei die erste Signalisierungsnachricht ein spezifiziertes Modulationsformat und eine geforderte spektrale Bandbreite einer herzustellenden Wellenlängenverbindung umfasst, wobei der erste Knoten auf der Netzseite ein Knoten auf der Netzseite ist, der dem ersten Knoten auf der Clientseite benachbart ist;
eine Wegerfassungseinheit (92), die dafür ausgelegt ist, durch Berechnung gemäß dem spezifizierten Modulationsformat und der geforderten spektralen Bandbreite der herzustellenden Wellenlängenverbindung einen netzseitigen Weg der herzustellenden Wellenlängenverbindung zu gewinnen und eine spektrale Ressource gemäß dem spezifizierten Modulationsformat und der geforderten spektralen Bandbreite der herzustellenden Wellenlängenverbindung zuzuweisen;
eine erste Signalisierungsweiterleitungseinheit (93), die dafür ausgelegt ist, die erste Signalisierungsnachricht an einen zweiten Knoten auf der Netzseite entlang des Weges weiterzuleiten, wobei der zweite Knoten auf der Netzseite ein Knoten auf der Netzseite ist, der einem zweiten Knoten auf der Clientseite benachbart ist, wobei die erste Signalisierungsnachricht die zugewiesene spektrale Ressource transportiert, sodass der zweite Knoten auf der Clientseite ein Modulationsformat und eine spektrale Ressource des zweiten Knotens auf der Clientseite gemäß dem spezifizierten Modulationsformat der herzustellenden Wellenlängenverbindung und der zugewiesenen spektralen Ressource einstellt;
eine zweite Signalisierungsempfangseinheit (94), die dafür ausgelegt ist, eine zweite Signalisierungsnachricht zu empfangen, die vom zweiten Knoten auf der Clientseite zurückgesendet wurde, wobei die zweite Signalisierungsnachricht das Modulationsformat und die spektrale Ressource umfasst, die vom zweiten Knoten auf der Clientseite eingestellt werden; und
eine zweite Signalisierungsweiterleitungseinheit (95), die dafür ausgelegt ist, die zweite Signalisierungsnachricht an den ersten Knoten auf der Clientseite zurückzusenden, sodass der erste Knoten auf der Clientseite ein Modulationsformat und eine spektrale Ressource des ersten Knotens auf der Clientseite gemäß dem Modulationsformat und der spektralen Ressource einstellt, welche vom zweiten Knoten auf der Clientseite eingestellt werden, wodurch die Herstellung der Wellenlängenverbindung abgeschlossen wird.

8. Knotenvorrichtung auf der Netzseite zur Herstellung einer Wellenlängenverbindung mit einstellbarer spektraler Bandbreite gemäß Anspruch 7, wobei das spezifizierte Modulationsformat und die geforderte spektrale Bandbreite der herzustellenden Wellenlängenverbindung vom ersten Knoten auf der Clientseite und dem zweiten Knoten auf der Clientseite durch Verhandlung in einer Rufphase bestimmt oder von einer dritten Partei spezifiziert werden.

9. Knotenvorrichtung auf der Netzseite zur Herstellung einer Wellenlängenverbindung mit einstellbarer spektraler Bandbreite gemäß Anspruch 7, wobei die erste Signalisierungsnachricht und die zweite Signalisierungsnachricht RSVP-Nachrichten sind, welche ein Erweiterungsfeld umfassen, in der ersten Signalisierungsnachricht der im Erweiterungsfeld transportierte Inhalt das spezifizierte Modulationsformat und die geforderte spektrale Bandbreite der herzustellenden Wellenlängenverbindung umfasst und in der zweiten Signalisierungsnachricht der im Erweiterungsfeld transportierte Inhalt das Modulationsformat und die spektrale Ressource umfasst, welche vom zweiten Knoten auf der Clientseite eingestellt werden.

10. Knotenvorrichtung auf der Netzseite zur Herstellung einer Wellenlängenverbindung mit einstellbarer spektraler Bandbreite gemäß Anspruch 9, wobei das Erweiterungsfeld die Länge des transportierten Inhalts, eine Inhaltstypkennung und den Inhalt umfasst.

11. Knotenvorrichtung auf der Netzseite zur Herstellung einer Wellenlängenverbindung mit einstellbarer spektraler Bandbreite gemäß einem der Ansprüche 7-10, wobei die Wegerfassungseinheit umfasst:
eine Wegbeschränkungserfassungs-Untereinheit, die dafür ausgelegt ist, Wegbeschränkungsinformationen gemäß dem spezifizierten Modulationsformat und der geforderten spektralen Bandbreite der herzustellenden Wellenlängenverbindung zu gewinnen, wobei das Modulationsformat und die spektrale Bandbreite in der ersten Signalisierungsnachricht enthalten sind; und
eine Wegerfassungs-Untereinheit, die dafür ausgelegt ist, mithilfe der Wegbeschränkungsinformationen und der spezifizierten geforderten spektralen Bandbreite den netzseitigen Weg der herzustellenden Wellenlängenverbindung zu gewinnen, welcher den Wegbeschränkungsinformationen genügt.

12. Knotenvorrichtung auf der Netzseite zur Herstellung einer Wellenlängenverbindung mit einstellbarer spektraler Bandbreite gemäß einem der Ansprüche 7-10, wobei die erste Signalisierungsnachricht ferner Wegbeschränkungsinformationen umfasst und die Wegerfassungseinheit speziell dafür ausgelegt ist, mithilfe der Wegbeschränkungsinformationen und der spezifizierten geforderten spektralen Bandbreite den netzseitigen Weg der herzustellenden Wellenlängenverbindung zu gewinnen, welcher den Wegbeschränkungsinformationen genügt.

## Revendications

1. Procédé permettant d'établir une connexion en longueur d'onde à largeur de bande spectrale réglable, le procédé comprenant les étapes consistant à :
recevoir (11), par un premier noeud d'un côté réseau, un premier message de signalisation envoyé par un premier noeud d'un côté client, le premier message de signalisation comprenant un format de modulation spécifié et une largeur de bande spectrale exigée d'une connexion en longueur d'onde à établir, le premier noeud du côté réseau étant un noeud du côté réseau adjacent au premier noeud du côté client ;
obtenir (12), par le premier noeud du côté réseau par le calcul en fonction du format de modulation spécifié et de la largeur de bande spectrale exigée de la connexion en longueur d'onde à établir, un trajet du côté réseau de la connexion en longueur d'onde à établir, et allouer une ressource spectrale en fonction du format de modulation spécifié et de la largeur de bande spectrale exigée de la connexion en longueur d'onde à établir ;
retransmettre (13), par le premier noeud du côté réseau, le premier message de signalisation jusqu'à un deuxième noeud du côté réseau le long du trajet, le deuxième noeud du côté réseau étant un noeud du côté réseau adjacent à un deuxième noeud du côté client, le premier message de signalisation acheminant la ressource spectrale allouée;
retransmettre (13), par le deuxième noeud du côté réseau, le premier message de signalisation au deuxième noeud du côté client, le premier message de signalisation acheminant la ressource spectrale allouée, de sorte que le deuxième noeud du côté client définisse un format de modulation et une ressource spectrale du deuxième noeud du côté client en fonction du format de modulation spécifié de la connexion en longueur d'onde à établir et de la ressource spectrale allouée ;
recevoir (14), par le premier noeud du côté réseau, un deuxième message de signalisation renvoyé par le deuxième noeud du côté client, le deuxième message de signalisation comprenant le format de modulation et la ressource spectrale définis par le deuxième noeud du côté client ; et
renvoyer (15), par le premier noeud du côté réseau, le deuxième message de signalisation au premier noeud du côté client, de sorte que le premier noeud du côté client définisse un format de modulation et une ressource spectrale du premier noeud du côté client en fonction du format de modulation et de la ressource spectrale définis par le deuxième noeud du côté client, en accomplissant ainsi l'établissement de la connexion en longueur d'onde.

2. Procédé permettant d'établir une connexion en longueur d'onde à largeur de bande spectrale réglable selon la revendication 1, dans lequel le format de modulation spécifié et la largeur de bande spectrale exigée de la connexion en longueur d'onde à établir sont déterminés par le premier noeud du côté client et par le deuxième noeud du côté client par négociation lors d'une phase d'appel, ou sont spécifiés par un tiers.

3. Procédé permettant d'établir une connexion en longueur d'onde à largeur de bande spectrale réglable selon la revendication 1, dans lequel le premier message de signalisation et le deuxième message de signalisation sont des messages RSVP comprenant un champ d'extension, dans le premier message de signalisation le contenu acheminé dans le champ d'extension comprend le format de modulation spécifié et la largeur de bande spectrale exigée de la connexion en longueur d'onde à établir ; et dans le deuxième message de signalisation le contenu acheminé dans le champ d'extension comprend le format de modulation et la ressource spectrale définis par le deuxième noeud du côté client.

4. Procédé permettant d'établir une connexion en longueur d'onde à largeur de bande spectrale réglable selon la revendication 3, dans lequel le champ d'extension comprend la longueur du contenu acheminé, un identificateur de type de contenu et le contenu.

5. Procédé permettant d'établir une connexion en longueur d'onde à largeur de bande spectrale réglable selon l'une quelconque des revendications 1 à 4, dans lequel l'étape consistant à obtenir, par le premier noeud du côté réseau par le calcul en fonction du format de modulation spécifié et de la largeur de bande spectrale exigée de la connexion en longueur d'onde à établir, le trajet du côté réseau de la connexion en longueur d'onde à établir comprend les étapes consistant à :
obtenir, par le premier noeud du côté réseau, des informations de restriction de trajet en fonction du format de modulation spécifié et de la largeur de bande spectrale exigée de la connexion en longueur d'onde à établir, le format de modulation et la largeur de bande spectrale exigée étant incorporés dans le premier message de signalisation ; et
obtenir, par le premier noeud du côté réseau, à l'aide des informations de restriction de trajet et de la largeur de bande spectrale exigée spécifiée, le trajet du côté réseau de la connexion en longueur d'onde à établir qui satisfait aux informations de restriction de trajet.

6. Procédé permettant d'établir une connexion en longueur d'onde à largeur de bande spectrale réglable selon l'une quelconque des revendications 1 à 4, dans lequel le premier message de signalisation reçu par le premier noeud du côté réseau et envoyé par le premier noeud du côté client comprend en outre des informations de restriction de trajet ; et
l'étape consistant à obtenir par le premier noeud du côté réseau par le calcul en fonction du format de modulation spécifié et de la largeur de bande spectrale exigée de la connexion en longueur d'onde à établir, le trajet du côté réseau de la connexion en longueur d'onde à établir comprend l'étape consistant à : obtenir, par le premier noeud du côté réseau, à l'aide des informations de restriction de trajet et de la largeur de bande spectrale exigée spécifiée, le trajet du côté réseau de la connexion en longueur d'onde à établir qui satisfait aux informations de restriction de trajet.

7. Premier dispositif nodal d'un côté réseau permettant d'établir une connexion en longueur d'onde à largeur de bande spectrale réglable, comprenant :
une première unité de réception de signalisation (91), configurée pour recevoir un premier message de signalisation envoyé par un premier noeud d'un côté client, le premier message de signalisation comprenant un format de modulation spécifié et une largeur de bande spectrale exigée d'une connexion en longueur d'onde à établir, le premier noeud du côté réseau étant un noeud du côté réseau adjacent au premier noeud du côté client ;
une unité d'acquisition de trajet (92), configurée pour obtenir, par le calcul en fonction du format de modulation spécifié et de la largeur de bande spectrale exigée de la connexion en longueur d'onde à établir, un trajet du côté réseau de la connexion en longueur d'onde à établir, et allouer une ressource spectrale en fonction du format de modulation spécifié et de la largeur de bande spectrale exigée de la connexion en longueur d'onde à établir ;
une première unité de retransmission de signalisation (93), configurée pour retransmettre le premier message de signalisation jusqu'à un deuxième noeud du côté réseau le long du trajet, le deuxième noeud du côté réseau étant un noeud du côté réseau adjacent à un deuxième noeud du côté client, le premier message de signalisation acheminant la ressource spectrale allouée de sorte que le deuxième noeud du côté client définisse un format de modulation et une ressource spectrale du deuxième noeud du côté client en fonction du format de modulation spécifié de la connexion en longueur d'onde à établir et de la ressource spectrale allouée ;
une deuxième unité de réception de signalisation (94), configurée pour recevoir un deuxième message de signalisation renvoyé par le deuxième noeud du côté client, le deuxième message de signalisation comprenant le format de modulation et la ressource spectrale définis par le deuxième noeud du côté client ; et
une deuxième unité de retransmission de signalisation (95), configurée pour renvoyer le deuxième message de signalisation au premier noeud du côté client, de sorte que le premier noeud du côté client définisse un format de modulation et une ressource spectrale du premier noeud du côté client en fonction du format de modulation et de la ressource spectrale définis par le deuxième noeud du côté client, en accomplissant ainsi l'établissement de la connexion en longueur d'onde.

8. Dispositif nodal du côté réseau permettant d'établir une connexion en longueur d'onde à largeur de bande spectrale réglable selon la revendication 7, dans lequel le format de modulation spécifié et la largeur de bande spectrale exigée de la connexion en longueur d'onde à établir sont déterminés par le premier noeud du côté client et par le deuxième noeud du côté client par négociation lors d'une phase d'appel, ou sont spécifiés par un tiers.

9. Dispositif nodal du côté réseau permettant d'établir une connexion en longueur d'onde à largeur de bande spectrale réglable selon la revendication 7, dans lequel le premier message de signalisation et le deuxième message de signalisation sont des messages RSVP comprenant un champ d'extension, dans le premier message de signalisation le contenu acheminé dans le champ d'extension comprend le format de modulation spécifié et la largeur de bande spectrale exigée de la connexion en longueur d'onde à établir ; et dans le deuxième message de signalisation le contenu acheminé dans le champ d'extension comprend le format de modulation et la ressource spectrale définis par le deuxième noeud du côté client.

10. Dispositif nodal du côté réseau permettant d'établir une connexion en longueur d'onde à largeur de bande spectrale réglable selon la revendication 9, dans lequel le champ d'extension comprend la longueur du contenu acheminé, un identificateur de type de contenu et le contenu.

11. Dispositif nodal du côté réseau permettant d'établir une connexion en longueur d'onde à largeur de bande spectrale réglable selon l'une quelconque des revendications 7 à 10, dans lequel l'unité d'acquisition de trajet comprend :
une sous-unité d'acquisition de restriction de trajet, configurée pour obtenir des informations de restriction de trajet en fonction du format de modulation spécifié et de la largeur de bande spectrale exigée de la connexion en longueur d'onde à établir, le format de modulation et la largeur de bande spectrale étant incorporés dans le premier message de signalisation ; et
une sous-unité d'acquisition de trajet, configurée pour obtenir, à l'aide des informations de restriction de trajet et de la largeur de bande spectrale exigée spécifiée, le trajet du côté réseau de la connexion en longueur d'onde à établir qui satisfait aux informations de restriction de trajet.

12. Dispositif nodal du côté réseau permettant d'établir une connexion en longueur d'onde à largeur de bande spectrale réglable selon l'une quelconque des revendications 7 à 10, dans lequel le premier message de signalisation comprend en outre des informations de restriction de trajet, et l'unité d'acquisition de trajet est plus particulièrement configurée pour obtenir, à l'aide des informations de restriction de trajet et de la largeur de bande spectrale exigée spécifiée, le trajet du côté réseau de la connexion en longueur d'onde à établir qui satisfait aux informations de restriction de trajet.
